# EUROPEAN PATENT APPLICATION

(11) **EP 3 654 272 A1**
(43) Date of publication of application: **20.05.2020**
(21) Application number: 19208862.3
(22) Date of filing: 13.11.2019
(51) Int. Cl.: G06Q 50/02, G06Q 10/06, G06K 9/00

(54) **CROP INJURY DIAGNOSIS SYSTEM AND METHOD**

(30) Priority: 15.11.2018 KR 20180140674
(71) Applicant: Korea Institute of Science and Technology, Seoul 02792 (KR)
(72) Inventor: KIM, Hyoungseok, 25451 Gangwon-do (KR); LEE, Unseok, 25451 Gangwon-do (KR); PARK, Soohyun, 25451 Gangwon-do (KR); LEE, Juyoung, 25451 Gangwon-do (KR); LEE, Taeksung, 02792 Seoul (KR); NHO, Chuwon, 25451 Gangwon-do (KR); KIM, Hoyoun, 25451 Gangwon-do (KR)
(74) Representative: advotec.

(57) **Abstract**

The present disclosure related to a system and method for diagnosing crop injury, and more particularly, to a crop injury diagnosis system and method capable of diagnosing and taking actions for crop injuries such as nutritional injury, physiological injury, environmental injury, and pest damage based on agricultural data of a farm.

A crop injury diagnosis system according to the present disclosure may include a learning network unit having a learning network constructed to represent the causation with crop injury from a plurality of agricultural data through the learning, a symptom diagnosing unit for extracting a crop injury item having a high probability of occurrence by inputting the plurality of agricultural data related to the farm to the learning network, and a cause extracting unit for extracting one or more main cause agricultural data by calculating the contribution to the crop injury item for each of the plurality of agricultural data, and according to the present disclosure, it is possible to enable the crop injury occurrence prediction, the cause diagnosis, and the response based on the data according to the present disclosure, and to protect the farm from various crop injuries at the inexpensive automated service regardless of the grower's skill.

## Description

### [Technical Field]

The present disclosure relates to a system and method for diagnosing crop injury, and more particularly, to a crop injury diagnosis system and method capable of diagnosing and taking actions for crop injuries such as nutritional injury, physiological injury, and damage occurrence by insect pests based on agricultural data of a farm.

### [Background Art]

Crop injury is to adversely affect the growth, fruiting, and harvesting of a crop and is commonly referred to as nutritional injury, physiological injury, insect pests, and blight.

Recently, due to the impact of climate change, damages such as stress caused by high heat and humidity in a greenhouse and excessive amount of light are increasing gradually. Atmospheric harmful gases invade the plant directly through the pore or adhere to and deposit on a leaf surface such as rain or fog, thereby inhibiting plant metabolism or photosynthesis and inhibiting or killing growth. In recent years, crop damage caused by the environment has been increasing gradually, such as suffering from the direct acute damage caused by hydrofluoric acid gas and occurring direct damage having a pollutant dust material attached to the leaf together with the rain.

A grower obtains knowledge about crop injury through various routes, such as experience, a booklet, and the internet, and prepares for them desperately. The grower determines it by himself/herself by comparing the obtained expertise knowledge, expert cases, and the like with the crop state of his/her farmhouse. However, for those who lack prior knowledge and experience in the crop injury, it is not easy to accurately diagnose and prevent the crop injury.

Recently, provided is a service in which the expert provides a review result thereto if the grower takes a picture of the crop that is suspected the pest damage in the farmhouse to upload it through a smartphone app. However, since the expert determines the pest damage through the fragmentary photo and text uploaded by the grower, there is a possibility of making a wrong determination, and since it is not possible to accurately know the situation of the farm, it is limited to provide an alternative for analyzing and controlling its cause.

The grower also uses a cultivation consultant to diagnose and prevent the crop injury. The cultivation consultant provides comprehensive cultivation information including injury diagnosis and control, but the grower pays several millions of won per visit and tens of millions of won per year while being consulted about twice a month, and even so, the grower misses the control period to abandon the cultivating period in many cases in the case of the farmhouse burdened with the consulting cost. Therefore, the crop injury is a critical problem that is fatal to the grower.

Meanwhile, the paradigm of agriculture is shifting to data-based precision agriculture as facility gardening and smart farm are spreading. That is, an agricultural control technology capable of controlling the nutrient solution and temperature and humidity based on various data on the crop and the cultivation environment, and maximally producing the highest quality crop is developing further.

Since an ICT-based agricultural technology provides various agricultural data, it is expected to provide efficient methods for prevention, cause analysis, and control of the injury such as the pest damage in the farm.

### [Related Art Document]

### [Patent Document]

(Patent Document 1) Korean Patent No. 1027327 (March 30, 2011)

### [Disclosure]

### [Technical Problem]

The present disclosure is intended to solve the above problem of the conventional crop injury diagnosing technology, and an object of the present disclosure is to provide an automated crop injury diagnosing solution for crop injury prediction, cause diagnosis, and response based on farm-specific cultivation environment and various agricultural information.

### [Technical Solution]

A crop injury diagnosis system according to the present disclosure for achieving the object includes a learning network unit having a learning network constructed to represent the causation with crop injury from a plurality of agricultural data through the learning; a symptom diagnosing unit for extracting a crop injury item having a high probability of occurrence by inputting the plurality of agricultural data related to a farm to the learning network; and a cause extracting unit for extracting one or more main cause agricultural data by calculating a contribution to the crop injury item for each of the plurality of agricultural data.

Further, the crop injury diagnosis system may further include a cause analyzing unit for obtaining time series data of the main cause agricultural data, and extracting particular information including at least one among the magnitude of a change rate and time data, the magnitude of a value and time data, and a predetermined event and time data of the time series data, and may further include an action providing unit for verifying the probability of occurrence for the crop injury item by applying the particular information to a predetermined rule and providing action information.

Further, the cause extracting unit may input original data to one of the main cause agricultural data, provide, to the learning network unit, remaining main cause agricultural data as a zero, and then determine it as the contribution of the main cause agricultural data received by the original data by calculating the probability at which the crop injury item will occur in the learning network.

Further, the object may be achieved by a crop injury diagnosis method including (a) constructing a learning network to represent the causation with a crop injury result from a plurality of agricultural data through the learning; (b) inputting the plurality of agricultural data related to a farm to the learning network, and extracting a crop injury item having a high probability of occurrence; (c) calculating a contribution to the crop injury item of each of the plurality of agricultural data; and (d) extracting one or more main cause agricultural data based on the contribution, in the crop injury diagnosis method according to another aspect of the present disclosure.

Further, the method may further include (e) obtaining time series data of the main cause agricultural data; and (f) extracting particular information including at least one among the magnitude of a change rate and time data, the magnitude of a value and time data, and a predetermined event and time data of the time series data, and may further include (g) verifying the probability of occurrence for the crop injury item by applying the particular information to a predetermined rule; and (h) providing a predetermined action information based on the crop injury item and the particular information.

In particular, the calculating the contribution may include (i) calculating the probability at which the crop injury item will occur by changing a value of remaining main cause agricultural data except for agricultural data to be calculated as a zero to input it to the learning network; and (j) repeating the (i) with respect to each of one or more main cause agricultural data.

### [Advantageous Effects]

According to the present disclosure, it is possible to enable the crop injury occurrence prediction, the cause diagnosis, and the response based on the data, and to protect the farm from various crop injuries through the inexpensive automated service regardless of the grower's skill.

### [Description of Drawings]

FIG. 1 is a block diagram of a crop injury diagnosis system according to an embodiment of the present disclosure.
FIG. 2 is a flowchart of a crop injury diagnosis method according to an embodiment of the present disclosure.
FIG. 3 is a schematic diagram of a data processing procedure according to an embodiment of the present disclosure.

### [Best Mode]

Hereinafter, embodiments of the present disclosure will be described in detail with reference to the accompanying drawings.

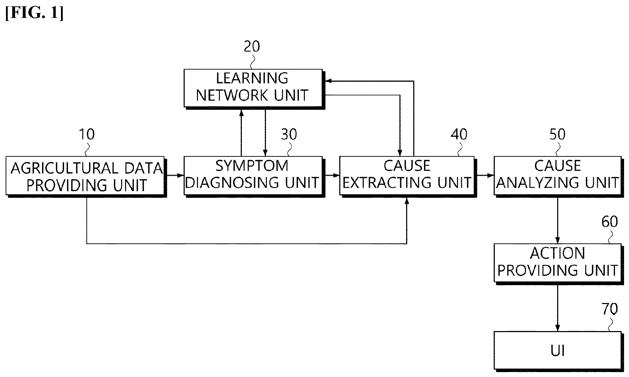

FIG. 1 is a block diagram of a crop injury diagnosis system according to an embodiment of the present disclosure.

Referring to FIG. 1, a crop injury diagnosis system according to an embodiment of the present disclosure is configured to include an agricultural data providing unit 10, a learning network unit 20, a symptom diagnosing unit 30, a cause extracting unit 40, a cause analyzing unit 50, an action providing unit 60, and a user interface 70.

The agricultural data providing unit 10 is for generating and providing various agricultural data related to crop cultivation, and may be comprehensively implemented by using various sensor modules for collecting cultivation environment data of a farm, an integrated environmental controller for providing various control information of a smart farm, for example, whether to open and close the side window and the time, and nutrient solution concentration and nutrient solution control algorithm information, a task management server for providing all information about the task of the farm, an integrated DB for providing external environmental information about atmospheric information, wind speed, and the like, a computerized farming log, and a growth information data obtaining means of the crop, for example, an infrared camera, a spectroscopic sensor, a gas sensor, or the like.

Therefore, the agricultural data providing unit 10 may be implemented by a data collection device, a data management device, a smart farm control device, and the like, or may be implemented in the form of a database that receives and manages data from these devices.

The learning network unit 20 may be implemented by including a learning network constructed to represent the causation with the crop injury from a plurality of agricultural data through the learning, and a memory and/or a processor for storing it. Here, the learning network, as a deep learning-based network, may be implemented by a known deep learning network such as a MultiLayer Processing (MLP), a Convolution Neural Network (CNN), or a Recurrent Neural Network (RNN), and may be implemented alternatively through various AI networks to be developed in the future but any type of network does not limit the present disclosure particularly.

The symptom diagnosing unit 30 is for extracting a crop injury item having a high probability of occurrence by inputting a plurality of agricultural data related to the farm to the learning network, and obtains the probability of occurrence of the crop injuries by providing the plurality of agricultural data received from the agricultural data providing unit 10 to the learning network unit 20.

As described above, the crop injury includes nutrient injury, physiological injury, environmental injury, insect pests, blight, and the like. For example, the crop injury of the tomato may be nutrient injury due to deficiency and excess of N, P, K, Ca, Mg, S, Fe, B, Mn, Zn, Cu, Mo and the like; the physiological injuries such as self-stopping, abnormal stem, formation of adventitious bud, and leaf curl; the environmental injuries such as weeds, climate change, soil pollution, water pollution, harmful gases, and air pollution; the pest damage due to about 40 types of the pests; and the air infectious, soil infectious, and insect infectious diseases.

Through the learning network, the symptom diagnosing unit 30 inputs the agricultural data obtained from the farm to estimate the probability of occurrence of the crop injury items in the farm or to extract the crop injury item having the high probability of occurrence.

The cause extracting unit 40 extracts main cause agricultural data by calculating a contribution of each of the plurality of agricultural data as the cause of occurring the crop injury. Here, the contribution may select a method for using a weight according to a structure of the learning network, but takes a method for calculating the contribution of the agricultural data to be evaluated by calculating the probability of occurrence of the crop injury item if all of the remaining data except for the agricultural data to be evaluated have been input as '0'.

The cause analyzing unit 50 extracts particular information by obtaining time series data of the main cause agricultural data, and analyzing it. For example, the cause analyzing unit 50 may use them as the particular information by obtaining the change information of the internal temperature of the smart farm for 2 weeks, and determining whether a temperature change rate, an average temperature change rate before and after sunrise, a peak value of the high temperature or the low temperature, and the like deviate from a predetermined reference.

The action providing unit 60 verifies whether the rule-based particular information is the cause of the crop injury item and provides action information on this. Here, the rule is composed of a data structure that may match the agricultural data with the cause of the crop injury provided by experts to provide a verifying means of identifying the cause of the crop injury.

For example, the cause of occurring tomato gray mold rot is known to occur when the temperature continues in the range of 17 to 24 degrees in Celsius, and when the humidity is high, and therefore, provided is a rule that quantifies it to quantify the probability of occurrence as being high in proportion to the time at which the temperature range of 17 to 24 degrees and the average humidity of 70% or more are continuous.

Tomato anthrax is a representative bacterium that spreads seeds and is infected through the air by spore dissemination. The tomato anthrax occurs during the high temperature of 26 degrees or more and frequent rainfall, and occurs a lot if nitrogen fertilizer is applied a lot, and therefore, applied is a rule that is proportional to the time at which the average temperature of 26 degrees, the humidity condition and the water content condition of medium of 70% and 80% or more, respectively, are continuous, and quantifies the information on the nutrient solution composition ratio and the nutrient solution supply amount.

Verification of the probability of occurrence of the crop injury is performed by comparing the particular information of the main cause agricultural data of the farm with the rule of various crop injuries, if this is the case, the action for the corresponding crop injury is provided. The action provides a quantitative numerical management method, and provides a qualitative task method based on the particular information of the corresponding main cause agricultural data.

The user interface 70 serves as a means capable of confirming it by providing to a user the probability of occurrence of the crop injury, providing cause identification information of the XAI type, and providing action information on this.

The user interface 70 may be implemented as a general display, or a portable terminal, or may also be utilized as a data processing and input means for the agricultural data providing unit 10.

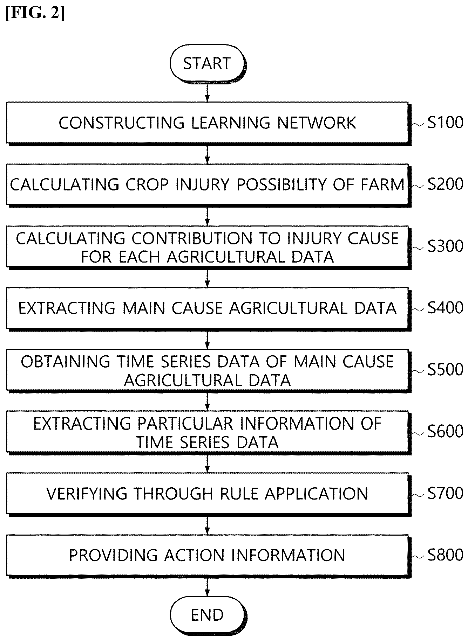

FIG. 2 is a flowchart of a crop injury diagnosis method according to an embodiment of the present disclosure.

Referring to FIG. 2, an operation of the crop injury diagnosis system according to an embodiment of the present disclosure illustrated in FIG. 1 will be described.

First, a learning network is constructed to represent the causation with the injury result from a plurality of agricultural data through the learning (operation S100). The learning network unit 20 learns the crop injury by using a deep learning network such as MLP, CNN, or RNN based on the plurality of agricultural data received from the agricultural data providing unit 10, or store the learning network related to the previously constructed crop injury.

The plurality of agricultural data related to the farm is input to the learning network, and a crop injury item having a high probability of occurrence is extracted (operation S200).

Here, it is preferable that the plurality of agricultural data related to the farm match with the plurality of agricultural data received during the learning, but since the sensor and information obtaining means installed in the farm may not match, the data may be somewhat more limited than the agricultural data received during the learning.

The agricultural data is configured to include about 100 types of data including smart farm illuminance, an accumulated light amount, temperature, humidity, CO₂ concentration, image sensor, an infrared image, nutrient solution composition information, a nutrient solution supply amount, a nutrient solution supply cycle, nutrient solution sterilization, nutrient solution EC, pH, the water content amount of the medium, a stem diameter, eddy, a flowering level, weather information, an indoor temperature deviation of the smart farm, task information such as the thinning the fruit, the farming plan and execution information of the farming log, worker information, and the like.

Since a general deep learning network provides the probabilistic result for the result, it is possible to input the agricultural data related to the farm into the learning network to extract the crop injury item having the high probability of occurrence.

Next, a contribution to the crop injury item having the high probability of occurrence is calculated for each of the plurality of agricultural data (operation S300).

Here, the contribution is a value for confirming the main factor causing the crop injury, and it is possible to obtain the contribution of the agricultural data by changing the input value of the learning network to measure the change amount of the probability of occurrence of the corresponding crop injury item, or inputting the remaining agricultural data as '0' while one or only a few of the agricultural data has been left.

That is, the contribution of each of the agricultural data may be obtained by calculating the probability of occurrence of the crop injury item by changing the value of the remaining main cause agricultural data except for the agricultural data to be calculated to '0' to input it to the learning network, and repeatedly performing it for each of the main cause agricultural data.

The contribution may be obtained as a probability value that has normalized the probability of occurrence of one crop injury relative to each of the agricultural data.

Therefore, one or more main cause agricultural data among the plurality of agricultural data are extracted based on the contribution (operation S400).

The extracted main cause agricultural data may be determined, for example, six items, such as an accumulated light amount, average temperature, average humidity, an average CO₂ concentration, a flowering level, and a stem diameter, among about 100 types of the agricultural data.

Time series data is obtained for the main cause agricultural data (operation S500), and the particular information including at least one of the magnitude of the change rate and time data, the magnitude of a value and time data, and a predetermined event and time data of the time series data is extracted (operation S600).

The time series data is provided from the agricultural data providing unit 10 to the cause analyzing unit 50, and the cause analyzing unit 50 extracts the particular information of the agricultural data in various aspects.

For example, if the average temperature change rate at any time point is larger than a predetermined reference, the time information and the average temperature change rate may be adopted as the particular information. Further, the time point or the time information in which the size and the change rate of the stem diameter are smaller than the predetermined reference are confirmed to select it as the particular information.

Such particular information is extracted for each of the exemplified six agricultural data, and the six particular information are integrated based on temporal concurrency or temporal causation.

Next, the probability of occurrence of the crop injury item is verified by applying the particular information to a predetermined rule (operation S700), and a predetermined action information is provided based on the crop injury item and the particular information (operation S800).

The particular information is matched and compared with the rule related to the causes for each crop injury to verify whether the occurrence cause of the crop injury item is correct. A plurality of particular information may be combined with each other and compared in a plurality of combinations, and each combination may provide the cause of occurrence that is specifically, probabilistically, found in the highest time series by a Maximum Likelihood (ML) reference.

If it is determined that the combination of the particular information meets the rule, the action providing unit 60 provides the predetermined action information based on the corresponding crop injury item and particular information through the user interface 70.

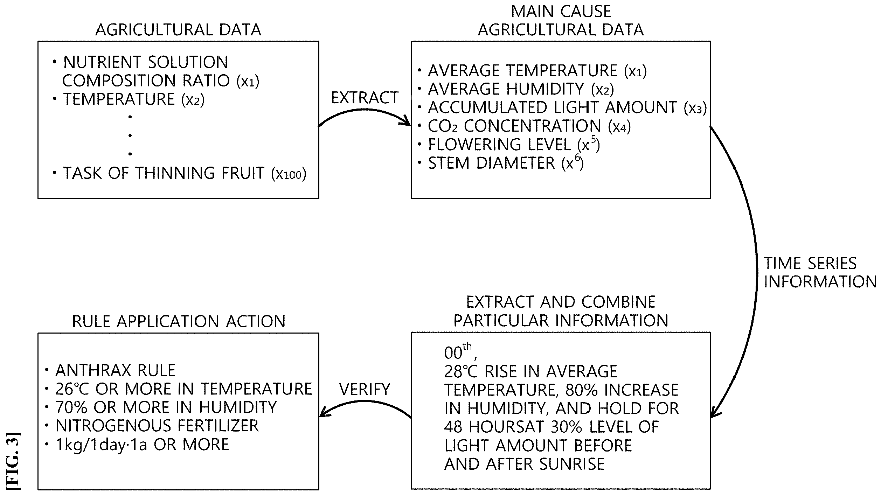

FIG. 3 is a schematic diagram of a data processing procedure according to an embodiment of the present disclosure.

Referring to FIG. 3, six types of the main cause agricultural data were extracted from about 100 types of the agricultural data related to the farm by using the learning network. As described above, the six types of the agricultural data having the high contribution with respect to one crop injury item having the high probability of occurrence were extracted. Of course, the same process may be performed directly and in parallel with respect to other crop injury items having the high probability of occurrence.

For the six types of the agricultural data selected as the main cause agricultural data, the particular information is extracted from the time series information including past records or records after a reference time point (an obtaining the time point of the agricultural data input to the learning network), and these are combined with each other.

The combined particular information is verified that the occurrence cause has been made by the mutual combination of the temporal aspect and the plurality of causes by applying the rule again. In FIG. 3, as the result of verifying it by comparing with the rule of the anthrax from the relevance such as the magnitude and change amount of these values, the order and causation of the changed time information, and the like from the six types of the main cause agricultural data, a high probabilistic cause is found for other factors except for a portion of the nitrogenous fertilizer content. All do not satisfy the rule, and the probability is given by a predetermined ML determination considering the difference and time from a threshold for each item becoming a reference.

As described above, although embodiments of the present disclosure have been described with reference to the drawings, it will be understood by those skilled in the art that a portion of the embodiments may be substituted or modified without departing from the technical spirit of the present disclosure.

For example, it will be understood that each component disclosed in FIG. 1 may be performed by a combination of software, a memory, and a processor. Since each component shares the memory and the processor, and only software may be used differently, each component may also be defined as the software and the memory for storing it. It will be understood that the component of the processing unit for such data processing may be an integrated and individual configuration in various systems.

Therefore, it should be understood that the scope of the present disclosure is defined by the disclosure recited in the claims and equivalents thereof.

## Claims

1. A crop injury diagnosis system, comprising:
a learning network unit having a learning network constructed to represent the causation with crop injury from a plurality of agricultural data through the learning;
a symptom diagnosing unit for extracting a crop injury item having a high probability of occurrence by inputting the plurality of agricultural data related to a farm to the learning network; and
a cause extracting unit for extracting one or more main cause agricultural data by calculating a contribution to the crop injury item for each of the plurality of agricultural data.

2. The crop injury diagnosis system of claim 1, comprising a cause analyzing unit for obtaining time series data of the main cause agricultural data, and extracting particular information comprising at least one among the magnitude of a change rate and time data, the magnitude of a value and time data, and a predetermined event and time data of the time series data.

3. The crop injury diagnosis system of claim 2, comprising an action providing unit for verifying the probability of occurrence for the crop injury item by applying the particular information to a predetermined rule and providing action information.

4. The crop injury diagnosis system of any one of claims 1 to 3,
wherein the cause extracting unit inputs original data to one of the main cause agricultural data, provides, to the learning network unit, remaining main cause agricultural data as a zero, and then determines it as the contribution of the main cause agricultural data received by the original data by calculating the probability at which the crop injury item will occur in the learning network.

5. A crop injury diagnosis method, comprising:
(a) constructing a learning network to represent the causation with a crop injury result from a plurality of agricultural data through the learning;
(b) inputting the plurality of agricultural data related to a farm to the learning network, and extracting a crop injury item having a high probability of occurrence;
(c) calculating a contribution to the crop injury item of each of the plurality of agricultural data; and
(d) extracting one or more main cause agricultural data based on the contribution.

6. The crop injury diagnosis method of claim 5, further comprising:
(e) obtaining time series data of the main cause agricultural data; and
(f) extracting particular information comprising at least one among the magnitude of a change rate and time data, the magnitude of a value and time data, and a predetermined event and time data of the time series data.

7. The crop injury diagnosis method of claim 6, further comprising:
(g) verifying the probability of occurrence for the crop injury item by applying the particular information to a predetermined rule; and
(h) providing a predetermined action information based on the crop injury item and the particular information.

8. The crop injury diagnosis method of any one of claims 5 to 7,
wherein the calculating the contribution comprises
(i) calculating the probability at which the crop injury item will occur by changing a value of remaining main cause agricultural data except for agricultural data to be calculated as a zero to input it to the learning network; and
(j) repeating the (i) with respect to each of one or more main cause agricultural data.
